# EUROPEAN PATENT APPLICATION

(11) **EP 2 927 774 A1**
(43) Date of publication of application: **07.10.2015**
(21) Application number: 13858709.2
(22) Date of filing: 28.11.2013
(51) Int. Cl.: G05G 1/10

(54) **ONE-HAND MANIPULATION HANDLE FOR HAND-HELD TERMINAL**

(30) Priority: 28.11.2012 CN 201220638696 U
(71) Applicant: Yang, Jinrong, Shanghai 201612 (CN)
(72) Inventor: Yang, Jinrong, Shanghai 201612 (CN)
(74) Representative: Eve, Rosemary Margaret
(86) International application number: PCT/CN2013/001460
(87) International publication number: WO 2014/082378

(57) **Abstract**

A one-hand manipulation handle for a hand-held terminal, connected with the handheld terminal in a wireless or wired manner; the one-hand manipulation handle is provided with a first wireless module and/or a first interface module, a first key module, a first power supply module, and a clamping module; the first wireless module or the first interface module is used to realize real-time communication with the hand-held terminal, and the clamping module fixes the handheld terminal to control the photographing or image pickup functions of the hand-held terminal, so that, when holding the hand-held terminal to take a photograph, the user will sense the same to be convenient, comfortable, stable and secure.

## Description

### Technical Field

The utility model relates to a manipulation handle, and in particular, to a handle held by one hand to manipulate a mobile phone or another hand-held terminal.

### Background Art

Along with the development of science and technology, hand-held terminals such as mobile phones have increasingly higher precisions on pictures or videos, and the hand-held terminals are basically necessities to carry around because of the high popularization. Because a mobile phone is more convenient for viewing, transmitting and sharing in time during photographing or image pickup, at most times, people perform photographing or image pickup by using a hand-held terminal such as a mobile phone. Moreover, for many people, the frequency of photographing using the mobile phone has exceeded the frequency of using a camera. However, when the mobile phone is used in photographing, problems such as inconvenient manipulation, poor holding feeling, and easy falling occur, which will cause inconvenient manipulation and poor photographing effects, or even cause the mobile phone to break due to falling. Therefore, photographing or image pickup cannot be performed smoothly by using one-hand manipulation.

### Summary of the Invention

In view of the above problems, an objective of the utility model is to provide a one-hand manipulation handle for a hand-held terminal. By using the handle, a hand-held terminal such as a mobile phone is fixed, and a photographing function of the mobile phone or hand-held terminal is manipulated by using a key on the handle. Remote control operation may also be performed in a non-fixed mode.

Technical solutions of the utility model are specifically described as follows:
A one-hand manipulation handle for a hand-held terminal is provided, the one-hand manipulation handle is provided with a first wireless module and/or a first interface module, a first key module, a first power supply module, and a clamping module; the one-hand manipulation handle is connected with the hand-held terminal in a wireless manner by using the first wireless module or connected with the hand-held terminal in a wired manner by using the first interface module;
the clamping module comprises a switchable clamping head, a slot-type sliding plate and a knob, the knob rotates to open the slot-type sliding plate, and when the slot-type sliding plate slides to control an opening of the clamp to a designated size, the knob rotates to secure the slot-type sliding plate, so as to perform real-time positioning on the slot-type sliding plate; after being opened, the slot-type sliding plate and the clamping head fix the hand-held terminal; the first key module is provided with user operation instruction keys, and the first power supply module provides a working power supply for the one-hand manipulation handle.

When the slot-type sliding plate is completely closed, the power supply is turned off, and when the slot-type sliding plate is opened, the power supply is turned on.

The user operation instruction keys are a photographing key, an image pickup key, and a zooming key, or a photographing/image pickup switching key, and a zooming key.

In the one-hand manipulation handle, the first wireless module may be WIFI, Bluetooth, or another near field communication such as NFC.

In the one-hand manipulation handle, the first key module may be provided for the user to input an instruction.

In the one-hand manipulation handle, the first power supply module may be a rechargeable lithium ion battery, a nickel-cadmium battery, a button battery, or a dry battery; and a grip position of the one-hand manipulation handle is further provided with an antiskid mechanism.

In the one-hand manipulation handle, the hand-held terminal is a mobile phone or another hand-held device.

In the one-hand manipulation handle, the one-hand manipulation handle may further be a remote control of the mobile phone or another hand-held device.

The one-hand manipulation handle for a hand-held terminal of the utility model has the following advantages (by using a mobile phone as an example). A conversion from a less-humanized behavior mode of performing photographing or image pickup by manipulating the mobile phone with both hands to a fully-humanized behavior mode of manipulating the mobile phone with one hand is implemented. The mobile phone is fixed by using the handle and then manipulated to photograph, so that the process of photographing using the mobile phone is more stable, more comfortable, more secure and more convenient, thereby granting extraordinary manipulation experiences of the mobile phone.

### Brief Description of the Drawings

FIG. 1 is a structural block diagram of a one-hand manipulation handle according to Embodiment 1;
FIG. 2 is a front view of a one-hand manipulation handle according to Embodiment 1;
FIG. 3 is a diagram showing an open state of a slot-type sliding plate of a one-hand manipulation handle according to Embodiment 1;
FIG. 4 is a diagram showing a use state of fixing a mobile phone by using a one-hand manipulation handle according to Embodiment 1;
FIG. 5 is a schematic assembling diagram of a one-hand manipulation handle according to Embodiment 2 and a hand-held terminal provided with an outer frame;
FIG. 6 is a schematic diagram of connecting a one-hand manipulation handle according to Embodiment 2 and a hand-held terminal;
FIG. 7 is a schematic diagram after connecting a one-hand manipulation handle according to Embodiment 2 and a hand-held terminal; and
FIG. 8 is a schematic diagram of connecting a one-hand manipulation handle according to Embodiment 2 and a hand-held terminal provided with an outer frame.

### Description of reference numerals

1 Crescent knob; 2 Photographing key; 3 Photographing/image pickup switching key; 4 First zooming key; 5 Second zooming key; 6 Groove 6; 7 Interface; 8 Switchable clamping head; 9 Slot-type sliding plate; 11 Outer frame; 12 Magnet cover-plate; 13 Magnet; 14 Projection structure; 15 Lockpin cap; 16 Lockpin; 17 Spring; 18 Push button; 19 Bracket; 20 Indicator; 21 DOME button; 22 Main circuit board; 23 Battery; 24 Main-sub board connection line; 25 Sub board; 26 USB multi-functional jack; 27 USB rubber plug; 28 Button; 29 Handle housing; 30 Screw.

### Detailed Description of the Preferred Embodiments

Solutions of the utility model are described in the following through embodiments.

### Embodiment 1

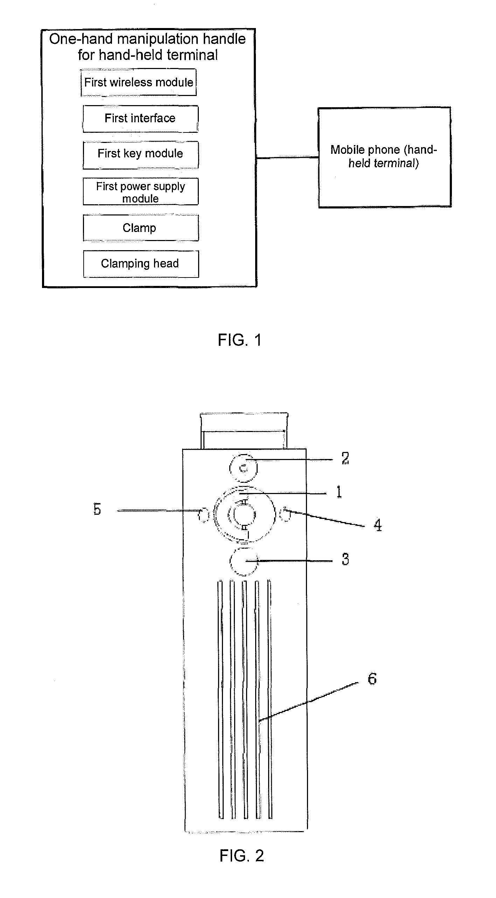

Referring to FIG. 1, a structural block diagram of a preferred embodiment of a one-hand manipulation handle for a hand-held terminal according to the utility model is shown. The one-hand manipulation handle is provided with a first wireless module, a first interface module, a first key module, a first power supply module, and a clamping module; the one-hand manipulation handle is connected with the hand-held terminal in a wireless manner by using the first wireless module or connected with the hand-held terminal in a wired manner by using the first interface module.

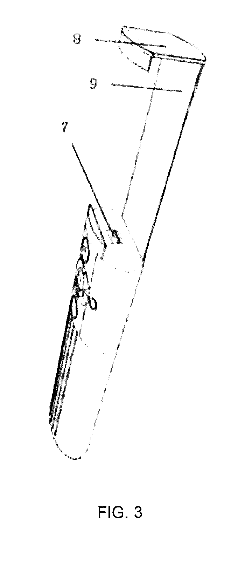

As shown in FIG. 2 and FIG. 3, the clamping module comprises a switchable clamping head 8, a slot-type sliding plate 9 and a crescent knob 1. The crescent knob 1 rotates to control open and close the slot-type sliding plate 9, and can implement real-time positioning of the slot-type sliding plate 9. After being opened, the slot-type sliding plate 9 and the switchable clamping head 8 together fix the hand-held terminal. The first key module is provided with user operation instruction keys, and the first power supply module provides a working power supply of the one-hand manipulation handle. A grip position of the one-hand manipulation handle is further provided with an antiskid mechanism, such as a protrusion, a rib and a groove. In this embodiment, a groove, such as a groove 6 is disposed.

When the slot-type sliding plate 9 is completely closed, the power supply is turned off, and when the slot-type sliding plate 9 is opened, the power supply is turned on.

The user operation instruction keys may be a photographing key, an image pickup key, and a zooming key, or a photographing/image pickup switching key, and a zooming key. In FIG. 2, there are a photographing key 2, a photographing/image pickup switching key 3, a first zooming key 4, and a second zooming key 5 disposed, wherein the first zooming key 4 and the second zooming key 5 are correspondingly used to photograph objects having different focal lengths.

The first wireless module is WIFI, Bluetooth, or another near field communication such as NFC.

The first interface module may be a common interface (comprising USB or the like) or an Apple system interface capable of inputting a user instruction.

The first key module may be provided for a user to input an instruction.

The first power supply module may be a rechargeable lithium ion battery, a nickel-cadmium battery, a button battery, or a dry battery.

As shown in FIG. 3, the common interface (comprising USB or the like) or Apple system interface is disposed on a surface of the hand-held terminal in contact with the one-hand manipulation handle after the clamping module fixes the hand-held terminal, an interface 7 is an interface that can be connected with an Apple system, or, the common interface (comprising USB or the like) or Apple system interface is disposed on a side surface of the hand-held terminal and is connectable with the hand-held terminal through a lead.

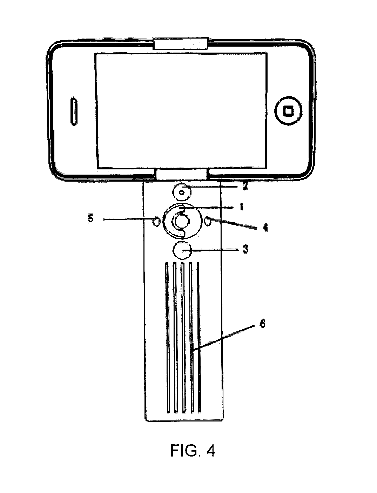

Commonly, the hand-held terminal is a mobile phone. As shown in FIG. 4, the crescent knob 1 rotates and the slot-type sliding plate 9 is open, the mobile phone is fixed by the slot-type sliding plate 9 and the switchable clamping head 8, then the crescent knob 1 is rotated to the original location to position the slot-type sliding plate 9, that is, after being positioned, the slot-type sliding plate 9 will not move vertically, and therefore, the mobile phone instruction can be manipulated conveniently with one hand.

In addition, the one-hand manipulation handle may also be used as a remote control of the mobile phone.

### Embodiment 2

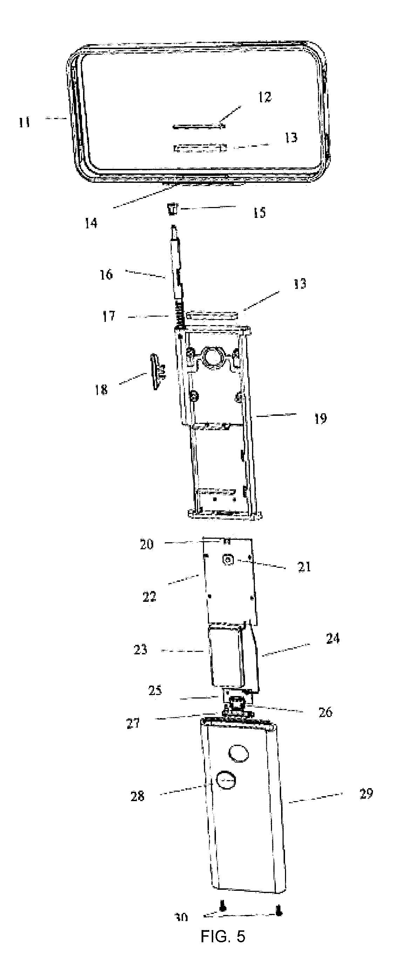

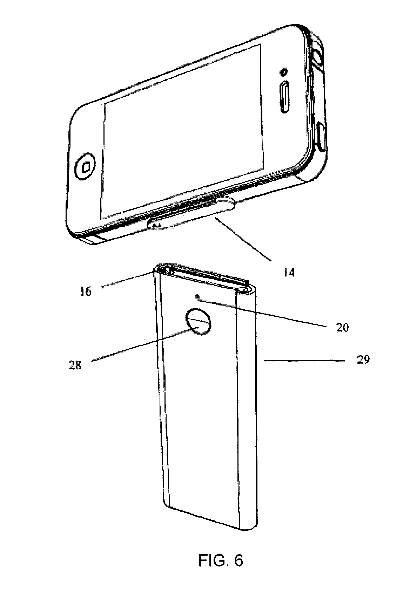

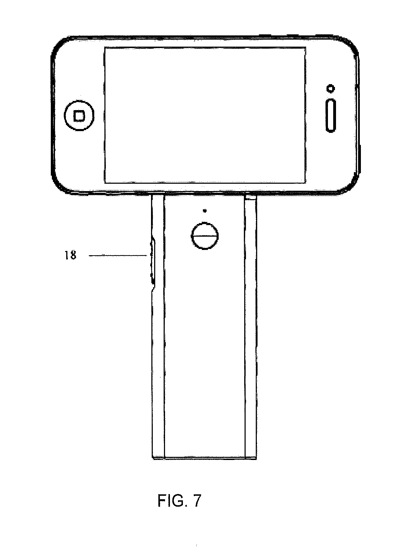

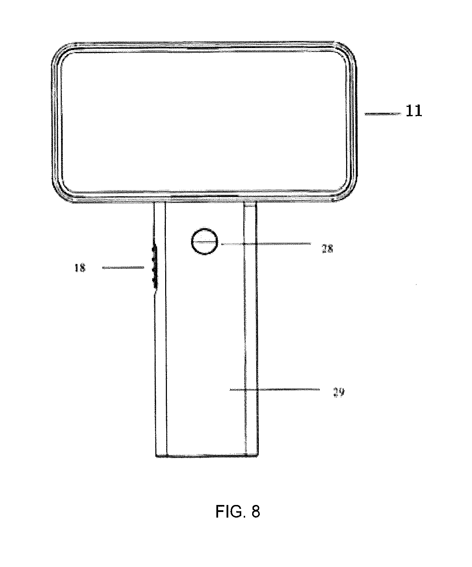

As shown in FIG. 5, FIG. 6, FIG. 7 and FIG. 8, a one-hand manipulation handle of this embodiment is provided with a first wireless module and/or a first interface module, a first key module, a first power supply module, and a clamping module; the one-hand manipulation handle is connected with the hand-held terminal in a wireless manner by using the first wireless module or connected with the hand-held terminal in a wired manner by using the first interface module. The clamping module comprises a connection sliding slot mounted at an end portion of the handle, a locking mechanism, and a magnet 13 disposed in a magnet cover-plate 12, the hand-held terminal or an outer frame 11 attached to the hand-held terminal is provided with a projection structure 14 corresponding to the connection sliding slot; and the projection structure 14 slides into the connection sliding slot to lock the handle onto the hand-held terminal.

The locking mechanism comprises a push button 18 and a lockpin cap 15 a lockpin 16 and a spring 17 connected sequentially; and by pushing the push button 18, the lockpin 16 provided with the lockpin cap 15 is connected with a hole on the projection structure 14 under the function of the spring 17, so as to prevent relative sliding between the handle and the hand-held terminal.

A bracket 19 supports and protects devices inside the handle. An indicator 20 indicates a real-time state of the hand-held terminal, for example, on/off, a working state or a connection state; and different states are displayed by using different light colors. A DOME button 21 is a built-in switch key and working key. A main circuit board 22 is located inside the handle and is a control center of the apparatus. A battery 23 provides power supply and output for various device modules. A main-sub board connection line 24 connects a main board and a sub board 25. A USB multi-functional jack 26 is provided, and a USB rubber plug 27 protects the USB jack to prevent foreign matters such as dust from entering the USB interface. A button 28 is an external control button, and can trigger the DOME button. A handle housing 29 is a housing of the handle. A screw 30 connects the handle housing 29 and an internal module.

In view of the above, the above embodiments are merely preferred embodiments of the utility model, and are not intended to limit the implementation scope of the utility model. Any equivalent variation and modification made based on the content in the scope of the claims of the utility model shall fall within the technical scope of the utility model.

## Claims

1. A one-hand manipulation handle for a hand-held terminal, wherein the one-hand manipulation handle is provided with a first wireless module and/or a first interface module, a first key module, a first power supply module, and a clamping module; the one-hand manipulation handle is connected with the hand-held terminal in a wireless manner by using the first wireless module or connected with the hand-held terminal in a wired manner by using the first interface module;
the clamping module comprises a switchable clamping head, a slot-type sliding plate and a knob, the knob rotates to open the slot-type sliding plate, and when the slot-type sliding plate slides to control an opening of the clamp to a designated size, the knob rotates to secure the slot-type sliding plate, so as to perform real-time positioning on the slot-type sliding plate; after being opened, the slot-type sliding plate and the clamping head fix the hand-held terminal; the first key module is provided with user operation instruction keys, and the first power supply module provides a working power supply for the one-hand manipulation handle.

2. The one-hand manipulation handle of claim 1, wherein when the slot-type sliding plate is completely closed, the power supply is turned off, and when the slot-type sliding plate is opened, the power supply is turned on.

3. The one-hand manipulation handle of claim 1, wherein the user operation instruction keys are a photographing key, an image pickup key, and a zooming key, or a photographing/image pickup switching key, and a zooming key.

4. The one-hand manipulation handle of claim 1, wherein the first wireless module is WIFI, Bluetooth, or near field communication.

5. The one-hand manipulation handle of claim 1, wherein the first interface module is a common interface or an Apple system interface for communicating with the hand-held terminal.

6. The one-hand manipulation handle of claim 1, wherein the first key module is provided for a user to input an instruction.

7. The one-hand manipulation handle of claim 1, wherein the first power supply module may be a rechargeable lithium ion battery, a nickel-cadmium battery, a button battery, or a dry battery; and a grip position of the one-hand manipulation handle is further provided with an antiskid mechanism.

8. The one-hand manipulation handle of claim 5, wherein the common interface or Apple system interface is disposed on a surface of the hand-held terminal in contact with the one-hand manipulation handle after the clamping module fixes the hand-held terminal, or, the common interface or Apple system interface is disposed on a side surface of the hand-held terminal and is connectable with the hand-held terminal through a lead.

9. The one-hand manipulation handle of claim 5, wherein the common interface is a USB interface.

10. The one-hand manipulation handle of any one of claims 1 to 9, wherein the hand-held terminal is a mobile phone.

11. The one-hand manipulation handle of claim 10, wherein the one-hand manipulation handle is a remote control of the mobile phone.

12. A one-hand manipulation handle for a hand-held terminal, wherein the one-hand manipulation handle is provided with a first wireless module and/or a first interface module, a first key module, a first power supply module, and a clamping module; the one-hand manipulation handle is connected with the hand-held terminal in a wireless manner by using the first wireless module or connected with the hand-held terminal in a wired manner by using the first interface module;
the clamping module comprises a connection sliding slot mounted at an end portion of the handle, a locking mechanism, and a magnet disposed in a magnet cover-plate, the hand-held terminal or an outer frame attached to the hand-held terminal is provided with a projection structure corresponding to the connection sliding slot; and the projection structure slides into the connection sliding slot to lock the handle onto the hand-held terminal; and
the first key module is provided with user operation instruction keys, and the first power supply module provides a working power supply for the one-hand manipulation handle.

13. The one-hand manipulation handle of claim 12, wherein the locking mechanism comprises a push button and a lockpin cap, a lockpin and a spring connected sequentially; and by pushing the push button, the lockpin provided with the lockpin cap is connected with a hole on the projection structure under the function of the spring.

14. The one-hand manipulation handle of claim 12, wherein the user operation instruction keys are a photographing key, an image pickup key, and a zooming key, or a photographing/image pickup switching key, and a zooming key.

15. The one-hand manipulation handle of claim 12, wherein the first wireless module is WIFI, Bluetooth, or near field communication.

16. The one-hand manipulation handle of claim 12, wherein the first interface module is a common interface or an Apple system interface for communicating with the hand-held terminal.

17. The one-hand manipulation handle of claim 12, wherein the first key module may be provided for a user to input an instruction.

18. The one-hand manipulation handle of claim 12, wherein the first power supply module is a rechargeable lithium ion battery, a nickel-cadmium battery, a button battery, or a dry battery; and a grip position of the one-hand manipulation handle is further provided with an antiskid mechanism.

19. The one-hand manipulation handle of claim 12, wherein the common interface or Apple system interface is disposed on a surface of the hand-held terminal in contact with the one-hand manipulation handle after the clamping module fixes the hand-held terminal, or, the common interface or Apple system interface is disposed on a side surface of the hand-held terminal and is connectable with the hand-held terminal through a lead.

20. The one-hand manipulation handle of any one of claims 12 to 19, wherein the hand-held terminal is a mobile phone.

21. The one-hand manipulation handle of claim 20, wherein the common interface is a USB interface.

22. The one-hand manipulation handle of claim 21, wherein the one-hand manipulation handle is a remote control of the mobile phone.
